# EUROPEAN PATENT APPLICATION

(11) **EP 4 243 034 A1**
(43) Date of publication of application: **13.09.2023**
(21) Application number: 20960941.1
(22) Date of filing: 27.11.2020
(51) Int. Cl.: G21C 17/07

(54) **ARRANGEMENT AND SYSTEM FOR REPAIRING THE LINING OF A SPENT FUEL POOL**

(30) Priority: 03.11.2020 RU 2020136095; 03.11.2020 RU 2020136088
(71) Applicant: Joint Stock Company "Rosenergoatom", Moscow 109507 (RU); LLC "SKTB PR", Moscow, 109316 (RU); JSC "NPO "TSNIITMASH", Moscow, 115088 (RU); Science and Innovations - Nuclear Industry Scientific Development, Private Enterprise, Moscow, 119017 (RU)
(72) Inventor: BATANOV, Aleksandr Fedorovich, Pushkino, 141207 (RU); CHERTOV, Sviatoslav Ivanovich, Moscow, 117405 (RU); BASHLAI, Anton Pavlovich, Moscow, 115561 (RU); TRUKH, Sergei Fedorovich, Dzerzhinskii, 140090 (RU); VOROB'EV, Dmitrii Valerevich, Moscow, 109439 (RU); LAVERYCHEV, Ilya Gennad'evich, Korolev, 141070 (RU); SHUBNIAKOV, Dmitrii Vladimirovich, Chekhov, 142300 (RU); GOROKHOV, Sergei Mikhailovich, Liubertsy, 140002 (RU); MAKAROV, Ivan Vasil'evich, Likino-Dulevo, 142672 (RU); TRUKHANOV, Kirill Alekseevich, Reutov, 143966 (RU); VOLOBUEV, Yuriy Sergeevich, Moscow, 117186 (RU); RAZYGRAEV, Nikolai Pavlovich, Moscow, 127206 (RU)
(74) Representative: Osmans, Voldemars
(86) International application number: PCT/RU2020/000641
(87) International publication number: WO 2022/098254

(57) **Abstract**

The invention relates to the field of atomic engineering, particularly to the equipment for leakage detection and repair of a damaged inner lining of NPP spent fuel pools filled with water. The arrangement and system for repairing the lining of a spent fuel pool, mainly the walls and bottom thereof, are additionally equipped with devices that are not submerged to the spent fuel pool, including welding equipment, and devices submerged to the spent fuel pool, including a submersible repair platform for the working mechanism installation. The working mechanism is equipped with a device for cleaning of weld seams and the surface of the spent fuel pool, and a wire cutting device, comprising a container for collection of cuttings and a pump for particulate removal. The leak sealing device is arranged in the form of a small-scale welding assembly connected to the welding equipment, and the submersible repair platform is equipped with means for its attachment to the surface of the spent fuel pool. The arrangement for repairing the lining of a spent fuel pool includes a submersible repair robot with a working unit installed on it. The invention enables to enhance the repair quality and reliability.

## Description

The family of inventions relates to the field of atomic engineering, particularly to the equipment for leakage detection and repair of a damaged inner lining of NPP spent fuel pools filled with water.

A device for repairing the lining of a spent fuel pool - a device for repair of a damaged area on an underwater section of a tank or pool wall as per Russian patent No. 2438199 - is known. The device comprises a guide system installed along a side wall at a certain distance from it and fastened to it for guiding of a sliding block moved in the longitudinal direction thereof. A setting element for a patch applied to the wall section containing the damaged area with its adhesive surface is installed on the sliding block with the possibility for movement. The device enables to repair hard-to-access damaged areas on a pool wall of a nuclear reactor plant. However, the leakage detection shall be performed with the use of another device. The known device also performs repair only through adhesion of a patch which does not always provide effective stopping of leaks. The known device does not perform any other types of repair such as welding.

A device for repairing the lining of a spent fuel pool (mainly the walls and the bottom) as per Russian patent No. 2661335, selected as the closest analogue and comprising a support frame and a trolley with a telescopic boom, a working mechanism, including a leakage search and detection module and working modules containing a cleaning device, a leak sealing device, working mechanism fasteners, a working mechanism attachment, retaining, lifting and lowering mechanism and a remote control device installed on the support frame with the possibility of movement, is also known. The known repair device enables to perform the leak search and detection, cleaning of the leaky section surface and subsequent application of a sealing patch, which is an unreliable and ineffective repair technique.

The task solved by the proposed family of inventions is fast and high-quality repair of a spent fuel pool.

The arrangement and system of the proposed family of inventions shall provide for leakage detection, repair of the spent fuel pool floor lining and leak-tightness monitoring for the repaired areas below the water (boron solution) level as well as leakage detection and repair of the spent fuel pool lining in the junction areas between two walls or a wall and the floor. Difficulty of the task resides in the fact that the working zone of the device is limited with the racks installed in water (boron solution). The rack supports, the coolant supply and intake pipes, the rack stops, columns and cables are located in the spent fuel pool. At first, it is required to detect the leakage area on the spent fuel pool surface, to determine the defect size and to clean this area prior to surfacing. The thickness of the spent fuel pool lining sheet is approximately 4 mm; the sheets are made of alloy steel, for example, 08H18N10T. Surfacing shall be performed in boron solution, then it is necessary to treat the resultant seam (surfacing) in such a way so that to prevent ingress of any scale fragments into the spent fuel pool after the surfacing process. Then the resultant surfacing on the repaired spent fuel pool surface shall be inspected.

The previously known techniques and devices did not provide the required repair quality. Thus, the technical result of the proposed family of inventions involves enhancement of the repair quality and reliability.

The above-mentioned technical result related to the arrangement for repairing the lining of a spent fuel pool is achieved by the fact that, in accordance with this invention, the arrangement for repairing the lining of a spent fuel pool, comprising a delivery device with a trolley, a working unit, including a leakage search and detection module and working modules, comprising a cleaning device, a leak sealing device, working unit fasteners, a working unit attachment, retaining, lifting and lowering mechanism and a remote control device, is additionally equipped with devices not submerged to the spent fuel pool and including pneumatic and electrical equipment, an electric control cabinet, a control panel with an ultrasonic flaw detector and welding equipment, and devices submerged into the spent fuel pool and including a submersible repair robot with a working unit installed on it, wherein the submersible repair robot is equipped with a transport platform with working modules located on it; the transport platform is arranged in the form of a frame structure and equipped with means for attachment to the spent fuel pool surface arranged in the form of vacuum cups; the working unit is equipped with drives with translational or rotary movement of an output component, an ultrasonic flaw detection tip, a video surveillance device, a device for collection of wastes in the course of grinding, including a pump and a filter, a manipulator with servomotors and moving drives; the leak sealing device is arranged in the form of a small-scale welding assembly connected to the welding equipment; the delivery device is arranged in the form of a delivery platform; the delivery platform is equipped with a trolley for installation of a working mechanism attachment, retaining, lifting and lowering mechanism, a trolley moving mechanism and arranged in the form of a detachable frame-and-beam structure equipped with guides for movement of the trolley installed on them.

The arrangement for repairing the lining of a spent fuel pool is preferably equipped with moving drives of the working modules.

The arrangement for repairing the lining of a spent fuel pool can be additionally equipped with feedback sensors installed in the rods of each of the three servomotors for movement of the platform with the working modules.

The small-scale welding assembly of the arrangement for repairing the lining of a spent fuel pool preferably includes a rectifier on a trolley, a control unit, including a pressurizing system, connecting signal and power cables, a mobile unit, including a receiving gear motor, an oscillating device, a basic unit, including a leak-tight casing made of stainless steel, a pressure sensor, a coil of welding wire, a wire feed drive and a wire locking device.

The arrangement for repairing the lining of a spent fuel pool is preferably equipped with a wire nipping device.

The above-mentioned technical result related to the system for repairing the lining of a spent fuel pool is achieved by the fact that, according to this invention, the system for repairing the lining of a spent fuel pool, mainly the walls and the floor, comprising a delivery device, a working mechanism, including a leak search and detection module and working modules, comprising a cleaning device, a leak sealing device, working mechanism fasteners, a working mechanism attachment, retaining, lifting and lowering mechanism and a remote control device, is additionally equipped with devices not submerged to the spent fuel pool and including pneumatic and electrical equipment, an electric control cabinet, a control panel with an ultrasonic flaw detector and welding equipment, and devices submerged into the spent fuel pool and including a submersible repair platform for the working mechanism installation, wherein the working mechanism is equipped with a servomotor, an ultrasonic flaw detection tip, a video surveillance device, a device for cleaning of weld seams and the spent fuel pool surface, a wire cutting device, including a container for collection of cuttings and a pump for particulate removal; the delivery device is arranged in the form of a delivery platform and equipped with a trolley for installation of a working mechanism attachment, retaining, lifting and lowering mechanism and a trolley moving mechanism; the delivery platform is arranged in the form of a detachable frame-and-beam structure equipped with guides for movement of the trolley installed on them; the submersible repair platform consists of external and internal frames installed with the possibility for movement and fixation in relation to each other and is connected to the delivery platform; the leak sealing device is arranged in the form of a small-scale welding assembly connected to the welding equipment, and the submersible repair platform is equipped with means for its attachment to the spent fuel pool surface.

The attachment devices of the submersible repair platform of the system for repairing the lining of a spent fuel pool are preferably arranged in the form of vacuum cups and/or tapered guides.

The system for repairing the lining of a spent fuel pool is preferably equipped with a working module extension drive.

The system for repairing the lining of a spent fuel pool can be equipped with position sensors and feedback sensors installed on the transport platform and the submersible repair platform.

The small-scale welding assembly of the system for repairing the lining of a spent fuel pool preferably includes a rectifier on a trolley, a control unit, including a pressurizing system, connecting signal and power cables, a mobile unit, including a receiving gear motor, an oscillating device, a basic unit, including a leak-tight casing made of stainless steel, a pressure sensor, a coil of welding wire, a wire feed drive and a wire locking device.

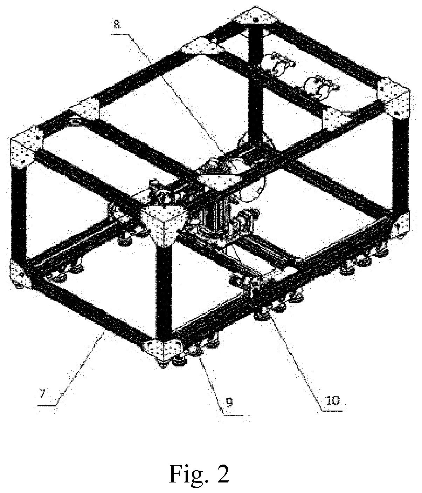

The general view of the spent fuel pool repair system is shown in Fig. 1; the general view of the submersible repair platform is shown in Fig. 2, and the general view of the submersible repair robot is shown in Fig. 3.

The main objective achieved by the proposed family of inventions is to detect and eliminate a defect.

The proposed family of inventions enables to fulfill the following requirements: to arrange a device intended to perform the operations for leakage search, cleaning and welding, to implement the said operations sequentially as per a pre-set algorithm in an aggressive environment, with due regard for the radiation component, wherein the device shall be delivered to a workplace in the spent fuel pool; it will be connected to search and repair working mechanisms (working modules) with the use of cables and hoses; the device shall be of small size, shall have sufficient positioning accuracy, perform deep confined space operations and be controlled remotely from an operator's workstation.

The system for repairing the lining of a spent fuel pool comprises the following components: the delivery platform 1, the working unit, including the leak search and detection module and working modules.

In terms of design the delivery platform 1 represents a mobile metal structure installed on running wheels moving on a rail track arranged along the spent fuel pool. Small-size motor gears with the velocity controlled by a variable speed drive are selected as the movement mechanisms of the delivery platform 1. Servomotors enable to move the process equipment with the positioning accuracy of ±1 mm. The drive position is determined with the use of potentiometer transducers.

The working modules comprise the cleaning device, the leak sealing device, the working mechanism fasteners, the working mechanism attachment, retaining, lifting and lowering mechanism,
the device for cleaning of weld seams and the spent fuel pool surface, the wire cutting device, including the container for collection of cuttings and the pump for particulate removal, as well as the remote control device.

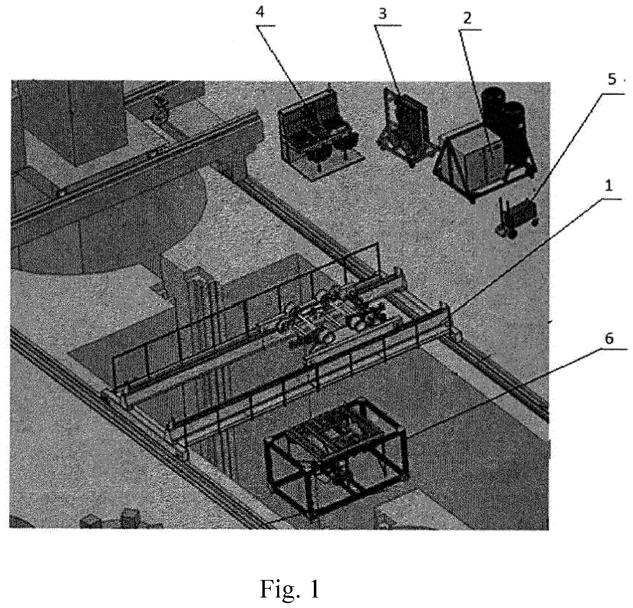

In order to perform deep confined space operations in the spent fuel pool, the system for repairing the lining of a spent fuel pool is equipped with devices not submerged into the spent fuel pool and presented schematically in Fig. 1, the including pneumatic equipment 2, the electric control cabinet 3, the control panel 4 with an ultrasonic flaw detector and the welding equipment 5.

The devices submerged to the spent fuel pool include the submersible repair platform 6, or the submersible repair robot in the other embodiment option. The submersible repair platform 6 is intended for installation of the working mechanism and the working modules.

The working mechanism is in its turn equipped with the servomotor, the ultrasonic flaw detection tip and the video surveillance device.

The submersible repair platform 6 is the frame structure 7 made of rolled sections with drives 8 for positioning of the working modules intended for installation on the rack section support or attachment to a spent fuel pool wall with the use of vacuum cups 9 or tapered guides.

Two guides for accurate positioning of the working modules 10 (the process equipment) are located on the frame structure of the submersible repair platform 6 along the long side of the platform, and one guide for accurate positioning of the process equipment is located along the short side. A motor selected in accordance with the required torque (load) and the working module movement speed is installed as the drive 8 for each guide.

All drives are equipped with end probes for monitoring of their actuation in accordance with an algorithm.

The submersible repair platform 6 is connected to the delivery platform 1, consisting of the external frame and the internal frame installed with the possibility for movement and fixation in relation to each other.

The control boxes, where distributors and control boards are located, are installed on the submersible repair platform 6. Ingress of any fluid from the spent fuel pool into the inner cavity of the boxes is prevented due to the cover sealing made of polyurethane material as well as by the internal gage pressure maintenance system. Electronic components of the distributors and control boards are protected against the impact of radiation with a lead lining along the periphery of the boxes on the internal side.

According to one of the embodiment options, the delivery platform 1 includes a platform, a cross beam and a control system and is equipped with a trolley for installation of the working mechanism attachment, retaining, lifting and lowering mechanism. The delivery platform is arranged in the form of a detachable frame-and-beam structure equipped with guides for movement of the trolley installed on them. The trolley body is made of standard rolled sections. The trolley movement mechanism is installed on the trolley body.

The system for repairing the lining of a spent fuel pool is equipped with position sensors and feedback sensors installed on the transport platform and the submersible repair platform.

The system for repairing the lining of a spent fuel pool is equipped with the working module extension drive.

The leak sealing device is arranged in the form of a small-scale welding assembly connected to the welding equipment 5. The small-scale welding assembly of the system for repairing the lining of a spent fuel pool includes a rectifier on a trolley, a control unit, including a pressurizing system, connecting signal and power cables, a mobile unit, including a receiving gear motor, an oscillating device, a basic unit, including a leak-tight casing made of stainless steel, a pressure sensor, a coil of welding wire, a wire feed drive and a wire locking device.

The spent fuel pool lining repair system operates as follows. Upon detection of any leakage exceeding 30 l/day through a lining section, a decision on performance of repair is made, and racks are removed from the section subject to repair in case of necessity. The repair system is delivered to the spent fuel pool. The delivery platform 1 is installed on the rail track of the refueling machine. Then the spent fuel pool repair system is connected to power and air supply networks. Then the working mechanism is submerged into the spent fuel pool with its positioning opposite the leakage detection place. The submersible repair platform 6 is positioned and fastened to the surface by suction with the use of the vacuum cups 9.

The defect is searched with the use of the ultrasonic flaw detector. The submersible repair platform 6 is installed in such a way so that the work zone of the working mechanism is situated in the corner of the section. The areas with weld joints are scanned first, then the metal sheets are scanned. In the absence of any defects, the submersible repair platform is moved to an adjacent area (with overlapping). The areas are scanned in columns or helically.

The submersible repair platform 6 is finally positioned in such a way so that the work zone covers the detected defect completely if the defect is found in the course of several installations. The defect is identified, then the defect is cleaned, and then the defect is welded along a pre-set trajectory; the stress relief sections are welded first. The melted end of the welding wire is nipped with the use of the wire cutting device. The surfacing weld inspection with subsequent cleaning of the surfacing is performed. After that, ultrasonic testing of the surfacing is performed.

Absence of any fluid or the quantity of escaped fluid in the leakage collection system is checked in order to control the repair quality. Any repair wastes are removed with the use of the device for cleaning of weld seams and the spent fuel pool surface.

Similar to the system for repairing the lining of a spent fuel pool described above, in order to perform deep confined space operations in the spent fuel pool, the arrangement for repairing the lining of a spent fuel pool is equipped with devices not submerged into the spent fuel pool and presented schematically in Fig. 1, including the pneumatic equipment 2, the electric control cabinet 3, the control panel 4 with an ultrasonic flaw detector and the welding equipment 5.

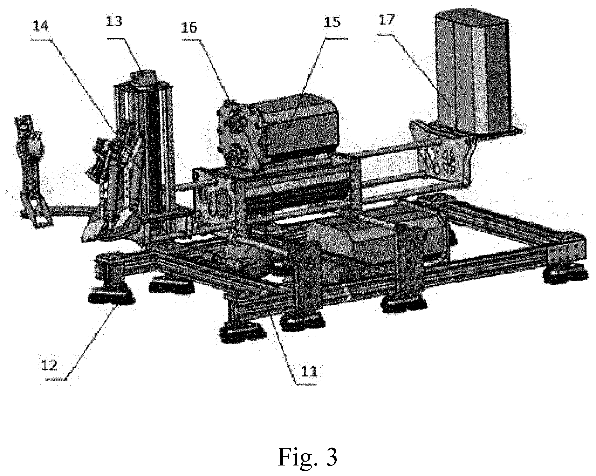

In this embodiment option, the devices submerged into the spent fuel pool include the submersible repair robot shown in Fig. 3 with the working unit and working modules installed on the submersible repair robot.

The working unit is in its turn equipped with the servomotor, the ultrasonic flaw detection tip and the video surveillance device.

The submersible repair robot is equipped with the transport platform 11 where the platform with working modules is installed.

The transport platform 11 is equipped with the means for attachment to the spent fuel pool surface arranged in the form of vacuum cups 12.

The working unit is equipped with drives with translational or rotary movement of the output component, the ultrasonic flaw detection tip, the video surveillance device 13, the device for collection of wastes in the course of grinding, including a pump with a drive and a filter, the manipulator 14 with servomotors and moving drives, the cleaning device, the leak sealing device 15 arranged in the form of a small-scale welding assembly connected to the welding equipment 5. The arrangement for repairing the lining of a spent fuel pool can be equipped with the working module extension drive 16 and the working unit control system 17.

According to another embodiment option, in terms of design, the delivery platform 1 consists of a platform bridge, a control system, a cross beam for the submersible repair robot attachment. The delivery platform 1 is equipped with a trolley for installation of the working mechanism attachment, retaining, lifting and lowering mechanism, the trolley movement mechanism, and is arranged in the form of a detachable frame-and-beam structure equipped with guides for movement of the trolley installed on them.

The control boxes, where distributors and control boards are located, are installed on the submersible repair robot.

Ingress of any fluid from the spent fuel pool into the inner cavity of the boxes is prevented due to the cover sealing made of polyurethane material as well as by the internal gage pressure maintenance system. Electronic components of the distributors and control boards are protected against the impact of radiation with a lead lining along the periphery of the boxes on the internal side.

The arrangement for repairing the lining of a spent fuel pool is equipped with position sensors and feedback sensors installed on the transport platform and the submersible repair robot.

The small-scale welding assembly of the arrangement for repairing the lining of a spent fuel pool includes a rectifier on a trolley, a control unit, including a pressurizing system, connecting signal and power cables, a mobile unit, including a receiving gear motor, an oscillating device, a basic unit, including a leak-tight casing made of stainless steel, a pressure sensor, a coil of welding wire, a wire feed drive and a wire locking device.

The arrangement for repairing the lining of a spent fuel pool is also equipped with a device for wire nipping subsequent to completion of welding operations and prior to making of the next weld.

The arrangement for repairing the lining of a spent fuel pool operates as follows. Upon detection of any leakage exceeding 30 l/day through a lining section, a decision on performance of repair is made, and racks are removed from the section subject to repair in case of necessity. The repair arrangement is delivered to the spent fuel pool. The delivery platform 1 is installed on the rail track of the refueling machine. Then the arrangement for the spent fuel pool repair is connected to power and air supply networks. After that, the submersible repair robot is submerged into the spent fuel pool with the use of ropes fastened on winches and positioned opposite the leakage detection place. The submersible repair robot is positioned and fastened to the spent fuel pool surface by suction with the use of vacuum cups 12.

The defect is searched with the use of the ultrasonic flaw detector. The submersible repair robot is installed in such a way so that its work zone is situated in the corner of the section. The areas with weld joints are scanned first, then the metal sheets are scanned. In the absence of any defects, the submersible repair robot is moved to an adjacent area (with overlapping). The areas are scanned in columns or helically.

The submersible repair robot 6 is finally positioned in such a way so that the work zone covers the detected defect completely if the defect is found in the course of several installations. The defect is identified, then the defect is cleaned, and then the defect is welded along a pre-set trajectory; the stress relief sections are welded first.

The surfacing inspection with subsequent cleaning of the surfacing weld is performed. After that, ultrasonic testing of the surfacing or video inspection with the use of high-resolution TV is performed.

Absence of any fluid or the quantity of escaped fluid in the leakage collection system is checked in order to control the repair quality.

In general, the arrangement and system for repairing the lining of a spent fuel pool represent a set of devices operated remotely in an aggressive environment with due regard for the radiation component and performing the repair operations according to a pre-set program.

## Claims

1. A system for repairing the lining of a spent fuel pool, mainly the walls and the floor, comprising a delivery device, a working mechanism, including a leak search and detection module and working modules, comprising a cleaning device, a leak sealing device, working mechanism fasteners, a working mechanism attachment, retaining, lifting and lowering mechanism and a remote control device, **characterized in that** the system for repair of the spent fuel poll lining is additionally equipped with devices not submerged to the spent fuel pool and including pneumatic and electrical equipment, an electric control cabinet, a control panel with an ultrasonic flaw detector and welding equipment, and devices submerged into the spent fuel pool and including a submersible repair platform for the working mechanism installation, wherein the working mechanism is equipped with a servomotor, an ultrasonic flaw detection tip, a video surveillance device, a device for cleaning of weld seams and the spent fuel pool surface, a wire cutting device, including a container for collection of cuttings and a pump for particulate removal; the delivery device is arranged in the form of a delivery platform and equipped with a trolley for installation of a working mechanism attachment, retaining, lifting and lowering mechanism, a trolley moving mechanism, and the delivery platform is arranged in the form of a detachable frame-and-beam structure equipped with guides for movement of the trolley installed on them; the submersible repair platform consists of external and internal frames installed with the possibility for movement and fixation in relation to each other and is connected to the delivery platform; the leak sealing device is arranged in the form of a small-scale welding assembly connected to the welding equipment, and the submersible repair platform is equipped with means for its attachment to the spent fuel pool surface.

2. The system according to claim 1, **characterized in that** the means for attachment of the submersible repair platform are arranged in the form of vacuum cups and/or tapered guides.

3. The system according to claim 1, **characterized in that** it is equipped with a working module extension drive.

4. The system according to claim 1, **characterized in that** it is equipped with position sensors and feedback sensors installed on the transport platform and the submersible repair platform.

5. The system according to claim 1, **characterized in that** the small-scale welding assembly includes a rectifier on a trolley, a control unit, including a pressurizing system, connecting signal and power cables, a mobile unit, including a receiving gear motor, an oscillating device, a basic unit, including a leak-tight casing made of stainless steel, a pressure sensor, a coil of welding wire, a wire feed drive and a wire locking device.

6. An arrangement for repairing the lining of a spent fuel pool, comprising a delivery device with a trolley, a working unit, including a leakage search and detection module and working modules, comprising a cleaning device, a leak sealing device, working unit fasteners, a working unit attachment, retaining, lifting and lowering mechanism and a remote control device, **characterized in that** the arrangement for repairing the lining of a spent fuel pool is additionally equipped with devices not submerged to the spent fuel pool and including pneumatic and electrical equipment, an electric control cabinet, a control panel with an ultrasonic flaw detector and welding equipment, and devices submerged into the spent fuel pool and including a submersible repair robot with a working unit installed on it, wherein the submersible repair robot is equipped with a transport platform with working modules located on it; the transport platform is arranged in the form of a frame structure and equipped with means for attachment to the spent fuel pool surface arranged in the form of vacuum cups; the working unit is equipped with drives with translational or rotary movement of an output component, an ultrasonic flaw detection tip, a video surveillance device, a device for collection of wastes in the course of grinding, including a pump and a filter, a manipulator with servomotors and moving drives; the leak sealing device is arranged in the form of a small-scale welding assembly connected to the welding equipment; the delivery device is arranged in the form of a delivery platform; the delivery platform is equipped with a trolley for installation of a working mechanism attachment, retaining, lifting and lowering mechanism, a trolley moving mechanism and arranged in the form of a detachable frame-and-beam structure equipped with guides for movement of the trolley installed on them.

7. The arrangement according to claim 6, **characterized in that** it is equipped with working module movement drives.

8. The arrangement according to claim 6, **characterized in that** it is equipped with feedback sensors installed in the rods of each of the three servomotors for movement of the platform with the working modules.

9. The arrangement according to claim 6, **characterized in that** the small-scale welding assembly includes a rectifier on a trolley, a control unit, including a pressurizing system, connecting signal and power cables, a mobile unit, including a receiving gear motor, an oscillating device, a basic unit, including a leak-tight casing made of stainless steel, a pressure sensor, a coil of welding wire, a wire feed drive and a wire locking device.

10. The arrangement according to any of claims 6-9, **characterized in that** it is equipped with a wire nipping device.
